# EUROPEAN PATENT APPLICATION

(11) **EP 4 796 398 A1**
(43) Date of publication of application: **26.08.2026**
(21) Application number: 24879114.7
(22) Date of filing: 18.10.2024
(51) Int. Cl.: B60W 20/15, B60W 10/08, B60L 15/20

(54) **MOTOR CONTROL METHOD AND DEVICE, AND VEHICLE**

(30) Priority: 19.10.2023 CN 202311361443
(71) Applicant: Great Wall Motor Company Limited, Baoding, Hebei 071000 (CN)
(72) Inventor: SUN, Yu, Baoding, Hebei 071000 (CN); LIU, Gang, Baoding, Hebei 071000 (CN); WU, Yongsheng, Baoding, Hebei 071000 (CN); LI, Bo, Baoding, Hebei 071000 (CN); YUAN, Xueli, Baoding, Hebei 071000 (CN); TIAN, Xuechao, Baoding, Hebei 071000 (CN); ZHANG, Wenxian, Baoding, Hebei 071000 (CN); WANG, Xuesong, Baoding, Hebei 071000 (CN); ZHANG, Badou, Baoding, Hebei 071000 (CN); HUANG, Guanzhong, Baoding, Hebei 071000 (CN)
(74) Representative: Klunker IP Patentanwälte PartG mbB
(86) International application number: PCT/CN2024/125728
(87) International publication number: WO 2025/082474

(57) **Abstract**

The present invention provides a motor control method and device, and a vehicle. The method is applied to the field of vehicle driving and comprises: determining whether the rotational speed of a BSG motor is greater than or equal to a preset rotational speed, when an engine of a vehicle is in a stopped state and the vehicle is in an intelligent start-stop mode; performing torque compensation on the BSG motor on the basis of operating parameters of the BSG motor to obtain target torque, when the rotational speed is greater than or equal to the preset rotational speed; and controlling the BSG motor to output the target torque so as to assist the engine in starting, in response to a starting instruction for the engine. According to the method, when the vehicle is in the intelligent start-stop mode and the engine is stopped, the BSG motor can be reasonably and accurately controlled, so that the BSG motor operates normally to drive the engine to start, thereby avoiding the failure of the vehicle to start due to the malfunction of the BSG motor, and guaranteeing safety of the vehicle driving.

## Description

This invention claims priority to Chinese Patent invention No. 202311361443.9, filed with the China National Intellectual Property Administration on October 19, 2023 and entitled "MOTOR CONTROL METHOD AND DEVICE, AND VEHICLE", the entire contents of which are incorporated herein by reference.

### TECHNICAL FIELD

The present invention relates to the field of vehicle driving, and in particular, to a method and an apparatus for controlling a motor, and a vehicle in the field of vehicle driving.

### BACKGROUND

A hybrid vehicle may be equipped with a Belt-Driven Starter Generator (BSG) motor. The BSG motor is generally arranged at the front end of an engine and is mainly used for supplying power to the vehicle and assisting in starting the engine.

When the engine of the vehicle is in an intelligent start-stop mode, a Hybrid Control Unit (HCU, also referred to as a hybrid controller) in the vehicle continuously requests a BSG motor to output a torque, to ensure normal starting of the vehicle.

In related art, in order to make an output torque of the BSG motor close to a requested torque sent by the HCU, resolver self-learning is continuously performed during operation of the BSG motor, to perform torque compensation on the BSG motor. However, when the vehicle is in the intelligent start-stop mode, and the engine is stopped, continuous resolver self-learning may cause a large fluctuation in the compensation torque of the BSG motor, resulting in a fault alarm of the BSG motor and failure of the BSG motor to operate, and ultimately causing that the vehicle to fail to start normally.

In conclusion, when an engine of a vehicle is in an intelligent start-stop mode, how to accurately control a BSG motor to ensure normal starting of the vehicle has become an urgent problem to be solved.

### SUMMARY

The present invention provides a method and an apparatus for controlling a motor, and a vehicle. According to this method, when a vehicle is in an intelligent start-stop mode and an engine is stopped, a BSG motor can be properly and accurately controlled, so that the BSG motor operates normally to drive the engine to start, thereby avoiding failure of the vehicle to start due to malfunction of the BSG motor, and ensuring safety of the vehicle driving.

According to a first aspect, the present invention provides a method for controlling a motor, where the method includes: determining whether a rotational speed of a Belt-Driven Starter Generator, BSG, motor is greater than or equal to a preset rotational speed, when an engine of a vehicle is in a stopped state and the vehicle is in an intelligent start-stop mode; performing torque compensation on the BSG motor based on operating parameters of the BSG motor to obtain a target torque after the torque compensation, when the rotational speed is greater than or equal to the preset rotational speed, wherein the operating parameters of the BSG motor comprise a sine signal and a cosine signal generated during rotor rotation of the BSG motor, and a requested torque received by the BSG motor, and the torque compensation is used to make an output torque of the BSG motor close to the requested torque; and controlling the BSG motor to output the target torque to assist the engine in starting, in response to a start instruction for the engine.

In the foregoing technical solution, in order to ensure that the vehicle can be started again, when the engine is in the stopped state during the vehicle driving, the present invention provides a method for controlling a motor. In the method, when the engine is in the stopped state, it is first determined whether the vehicle is in the intelligent start-stop mode. If yes, it is determined whether the rotational speed of the BSG motor is greater than or equal to the preset rotational speed. When the rotational speed of the BSG motor is greater than or equal to the preset rotational speed, torque compensation is performed on the BSG motor by using the operating parameters of the BSG motor, to make the output torque of the BSG motor close to the requested torque. When the vehicle is in the intelligent start-stop mode and the engine is stopped, due to the continuous torque compensation performed on the BSG motor, when the BSG motor rotates at a relatively low speed, the BSG motor may report an error and fail to drive the engine to rotate, resulting in the vehicle failing to start again. Therefore, when the rotational speed of the BSG motor is greater than the preset rotational speed, the BSG motor is controlled to perform torque compensation, which can improve accuracy of torque output of the BSG motor. In addition, a problem of error reporting of the BSG motor caused by performing torque compensation at a low rotational speed can be avoided, so that the BSG motor operates normally when the engine is stopped and at low rotational speed, thereby reducing a risk that the vehicle fails to start again during driving, and ensuring safety of the vehicle and occupants in the vehicle.

In a possible implementation, the method further includes: stopping the torque compensation on the BSG motor, when the rotational speed of the BSG motor is less than the preset rotational speed.

In the foregoing technical solution, when the rotational speed of the BSG motor is less than the preset rotational speed, the vehicle stops torque compensation on the BSG motor, which can avoid a problem of an error reported by the BSG motor caused by torque compensation at a low rotational speed, thereby ensuring that the BSG motor can operate normally at a low rotational speed, avoiding that the vehicle stalls during driving, and ensuring driving safety.

In a possible implementation, the performing torque compensation on the BSG motor based on the operating parameters of the BSG motor to obtain the target torque after the torque compensation includes: determining a target zero-angle parameter of the BSG motor based on the sine signal and the cosine signal, where the target zero-angle parameter is used to correct a deviation between a zero position of the BSG motor and zero position of a resolver; and determining the target torque based on the target zero-angle parameter and the requested torque.

In the foregoing technical solution, when the rotational speed of the BSG motor is greater than or equal to the preset rotational speed, the vehicle performs torque compensation on the BSG motor. Specifically, the vehicle may determine the target zero-angle parameter of the BSG motor by using the sine signal and the cosine signal generated during rotor rotation of the BSG motor, and then correct, based on the target zero-angle parameter, the deviation between the zero position of the BSG motor and the zero position of the resolver. Further, the target torque output by the BSG motor is determined based on the target zero-angle parameter and the requested torque.

It should be understood that, in order to ensure that the BSG motor outputs an optimal torque, the vehicle needs to correct a deviation angle between a resolver angle zero position (the zero position of the resolver) and a rotor zero position (the zero position of the BSG motor ) of the BSG motor during operation of the BSG motor. Therefore, the vehicle may compensate for the torque of the BSG motor by correcting the deviation between the zero position of the BSG motor and the zero position of the resolver.

The common position sensor for the BSG motor is mainly a resolver sensor. The resolver sensor may acquire, during operation of the BSG motor, a sine signal and a cosine signal that are generated by rotation of the rotor. Therefore, the vehicle may obtain a corrected target zero-angle parameter based on the sine signal and the cosine signal that are acquired, and then obtain, by using the target zero-angle parameter and the requested torque, the target torque obtained after the torque compensation.

In a possible implementation, the determining the target zero-angle parameter of the BSG motor based on the sine signal and the cosine signal includes: determining a zero-angle offset parameter based on the sine signal, the cosine signal, and a first mapping relationship, where the first mapping relationship is used to represent a correspondence between the sine signal, the cosine signal, and the zero-angle offset parameter; determining a first square value corresponding to the sine signal and a second square value corresponding to the cosine signal; determining a square root value of a sum of the first square value and the second square value; and determining a sum of the square root value and the zero-angle offset parameter as the target zero-angle parameter.

In the foregoing technical solution, when determining the target zero-angle parameter, the vehicle may obtain the zero-angle offset parameter by looking up a table according to the sine signal and the cosine signal. The zero-angle offset parameter directly reflect a deviation between the zero position of the resolver and the zero position of the motor. Furthermore, the vehicle calculates the first square value of the sine signal, the second square value of the cosine signal, and the square root value of the sum of the two square values. A sum of the square root value and the zero-angle offset parameter is determined as the target zero-angle parameter.

In a possible implementation, the determining the target torque based on the target zero-angle parameter and the requested torque includes: determining a target stator current based on the target zero-angle parameter, the requested torque, and a second mapping relationship, where the second mapping relationship is used to represent a correspondence among the target zero-angle parameter, the requested torque, and the target stator current; and determining the target torque based on the target stator current and a third mapping relationship, where the third mapping relationship is used to represent a correspondence between the target stator current and the target torque.

In the foregoing technical solution, after the target zero-angle parameter is determined, when the vehicle determines the target torque based on the target zero-angle parameter and the requested torque, the vehicle may first obtain, based on the target zero-angle parameter and the requested torque, the target stator current that actually needs to be supplied to a stator coil, and then obtain the target torque by looking up a table based on the target stator current, because the target torque is directly proportional to a stator current in the BSG motor.

In a possible implementation, the method further includes: controlling an operating mode of the BSG motor to be a neutral mode, to make the BSG motor not perform torque output, when the engine is in the stopped state and the vehicle is not in the intelligent start-stop mode. The neutral mode is a transitional mode used when the BSG motor switches the operating mode or a operating mode used when the BSG motor is faulty.

In the foregoing technical solution, when the engine of the vehicle is in the stopped state and the vehicle is not in the intelligent start-stop mode, the vehicle generally controls the BSG motor to be in the neutral mode in this state. The BSG motor does not output a torque in the neutral mode. Therefore, when the engine is in the stopped state and the vehicle is in a non-intelligent start-stop mode, the vehicle can control the BSG motor to operate normally, and there is no failure to operate caused by torque compensation.

In a possible implementation, before the determining whether the rotational speed of the BSG motor is greater than or equal to the preset rotational speed, the method further includes: obtaining a fault status of the BSG motor and a communication status of a BSG motor controller, where the fault status is indicative of whether the BSG motor has a fault, and the communication status is indicative of whether the BSG motor controller has a communication abnormality.

In the foregoing technical solution, in order to accurately acquire the rotational speed of the BSG motor, before determining whether the rotational speed of the BSG motor is greater than or equal to the preset rotational speed, the vehicle first needs to determine whether the BSG motor is has a fault, and whether the BSG motor controller can normally communicate with another ECU(s) in the vehicle. The above detection performed on the BSG motor and the BSG motor controller enables the rotational speed of the BSG motor to be accurately acquired.

In a possible implementation, the determining whether the rotational speed of the BSG motor is greater than or equal to the preset rotational speed includes: determining whether the rotational speed of the BSG motor is greater than or equal to the preset rotational speed, when the fault status of the BSG motor is indicative of the BSG motor having no fault and the communication status of the BSG motor controller is indicative of the BSG motor controller being in normal communication.

In the foregoing technical solution, when the BSG motor has no fault and the BSG motor controller is in normal communication, the vehicle acquires the rotational speed of the BSG motor, which can ensure accuracy of the acquired result and accuracy of subsequent torque output of the BSG motor.

According to a second aspect, the present invention provides an apparatus for controlling a motor, where the apparatus includes: a judgement module, configured to: determine whether a rotational speed of a BSG motor is greater than or equal to a preset rotational speed, when an engine of a vehicle is in a stopped state and the vehicle is in an intelligent start-stop mode; a determining module, configured to: perform torque compensation on the BSG motor based on operating parameters of the BSG motor to obtain a target torque after the torque compensation, when the rotational speed is greater than or equal to the preset rotational speed, where the operating parameters of the BSG motor include a sine signal and a cosine signal generated during rotor rotation of the BSG motor, and a requested torque received by the BSG motor, and the torque compensation is used to make an output torque of the BSG motor close to the requested torque; and a first control module, configured to: control the BSG motor to output the target torque to assist the engine in starting, in response to a start instruction for the engine.

In a possible implementation, the apparatus further includes a second control module, configured to: stop the torque compensation on the BSG motor, when the rotational speed of the BSG motor is less than the preset rotational speed.

In a possible implementation, the determining module is specifically configured to: determine a target zero-angle parameter of the BSG motor based on the sine signal and the cosine signal, where the target zero-angle parameter is used to correct a deviation between a zero position of the BSG motor and a zero position of a resolver; and determine the target torque based on the target zero-angle parameter and the requested torque.

In a possible implementation, the determining module is further configured to: determine a zero-angle offset parameter based on the sine signal, the cosine signal, and a first mapping relationship, where the first mapping relationship is used to represent a correspondence between the sine signal, the cosine signal, and the zero-angle offset parameter; determine a first square value corresponding to the sine signal and a second square value corresponding to the cosine signal; determine a square root value of a sum of the first square value and the second square value; and determine a sum of the square root value and the zero-angle offset parameter as the target zero-angle parameter.

In a possible implementation, the determining module is further configured to: determine a target stator current based on the target zero-angle parameter, the requested torque, and a second mapping relationship, where the second mapping relationship is used to represent a correspondence among the target zero-angle parameter, the requested torque, and the target stator current; and determine the target torque based on the target stator current and a third mapping relationship, where the third mapping relationship is used to represent a correspondence between the target stator current and the target torque.

In a possible implementation, the apparatus further includes: a third control module, configured to: control an operating mode of the BSG motor to be a neutral mode, to make the BSG motor not perform torque output, when the engine is in the stopped state and the vehicle is not in the intelligent start-stop mode, where the neutral mode is a transitional mode used when the BSG motor switches the operating mode or a operating mode used when the BSG motor is faulty.

In a possible implementation, before the determining whether the rotational speed of the BSG motor is greater than or equal to the preset rotational speed, the apparatus further includes: an acquisition module, configured to obtain a fault status of the BSG motor and a communication status of a BSG motor controller, where the fault status is indicative of whether the BSG motor has a fault, and the communication status is indicative of whether the BSG motor controller has a communication abnormality.

In a possible implementation, the judgment module is specifically configured to: determine whether the rotational speed of the BSG motor is greater than or equal to the preset rotational speed, when the fault status of the BSG motor is indicative of the BSG motor having no fault and the communication status of the BSG motor controller is indicative of the BSG motor controller being in normal communication.

According to a third aspect, the present invention provides a vehicle, including a memory and a processor. The memory is configured to store executable program code, and the processor is configured to invoke and execute the executable program code from the memory to cause the vehicle to execute the method according to the first aspect or any one of the possible implementations of the first aspect.

According to a fourth aspect, the present invention provides a computer program product, where the computer program product includes computer program code, and when the computer program code is executed on a computer, the computer executes the method according to the first aspect or any one of the possible implementations of the first aspect.

According to a fifth aspect, the present invention provides a computer-readable storage medium. The computer-readable storage medium stores computer program code. When the computer program code is executed on a computer, the computer executes the method according to the first aspect or any one of the possible implementations of the first aspect.

### BRIEF DESCRIPTION OF THE DRAWINGS

FIG. 1 is a schematic structural diagram of a BSG motor power system according to an embodiment of the present invention.
FIG. 2 is a schematic flowchart of a method for controlling a motor according to an embodiment of the present invention.
FIG. 3 is a curve diagram of resolver self-learning controlled based on engine rotational speed according to an embodiment of the present invention.
FIG. 4 is a schematic structural diagram of an apparatus for controlling a motor according to an embodiment of the present invention.
FIG. 5 is a schematic structural diagram of a vehicle according to an embodiment of the present invention.

### DETAILED DESCRIPTION OF THE EMBODIMENTS

The technical solutions in the present invention will be clearly described in detail below with reference to the accompanying drawings. In the description of embodiments of the present invention, unless otherwise stated, "/" represents an "or" relationship, for example, A/B may represent A or B. The term "and/or" used in this specification is merely an association relationship that describes associated objects, and represents that there may be three relationships. For example, A and/or B may represent three cases: only A exists, both A and B exist, and only B exists. In addition, in the description of the embodiments of the present invention, "a plurality of" means two or more than two.

In the following, the terms "first" and "second" are used for purposes of description only and are not to be understood as indicating or implying relative importance or implying a quantity of indicated technical features. Therefore, features limited by "first" or "second" may explicitly or implicitly include one or more of the features.

It should be understood that the method for controlling a motor provided in embodiments of the present invention is mainly applied to a BSG motor of a vehicle. To facilitate understanding of the method in embodiments of the present invention, the following first describes functions and a structure of the BSG motor in detail.

The BSG motor is usually installed in a hybrid vehicle (referred to as HV for short). Optionally, the hybrid vehicle may be a Plug in Hybrid Electric Vehicle (PHEV) and a Range-Extended Electric Vehicle (REEV). The BSG motor is an integrated machine that uses belt drive to achieve both starting and power generation. The BSG motor is connected to an engine via belt drive, and flexible connection of the belt ensures that no mechanical vibration is generated during power transmission by the BSG motor. The BSG motor may further adjust the rotational speed of the engine, to make smoothness of a vehicle in starting, stopping, idling, gear shifting, and acceleration and other conditions greatly improved.

During start-up, the BSG motor may quickly raise the rotational speed of the engine, to make the engine bypass the low-speed vibration range before ignition, so that smoothness of start-up of the engine can be improved.

Functions that the BSG motor can achieve are introduced below based on the structure of the BSG motor.

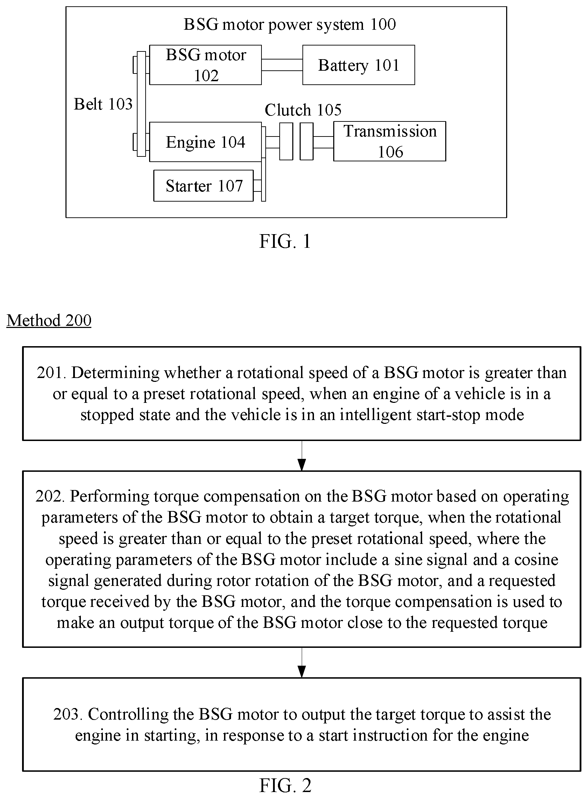

FIG. 1 is a schematic structural diagram of a BSG motor power system according to an embodiment of the present invention.

For example, as shown in FIG. 1, a BSG motor power system 100 includes a battery 101, a BSG motor 102, a belt 103, an engine 104, a clutch 105, and a transmission 106.

The battery 101 is connected to the BSG motor 102, a pulley of the BSG motor 102 is connected to a crankshaft pulley at the front end of the engine 104 via the belt 103, the clutch 105 is connected to the engine 104, and the transmission 106 is connected to the clutch 105.

It should be understood that, generally, a vehicle starts the engine 104 via the BSG motor 102.

The BSG motor 102 mainly has the following two functions: First, during operation of the engine 104, the engine 104 drives the pulley of the BSG motor 102 via the belt 103, so that the BSG motor 102 generates power, to meets the power demand of the vehicle. Second, during start-up of the engine 104, the BSG motor 102 drives the crankshaft pulley via the pulley, so as to provide start-up assistance for the engine 104.

In a possible implementation, a controller in the vehicle controls the battery 101 to provide electric power to the BSG motor 102, to drive the BSG motor 102 to rotate, thereby driving the pulley of the BSG motor 102 to rotate. When the pulley rotates, the belt 103 performs transmission. When the belt 103 performs transmission, the crankshaft pulley at the front end of the engine 104 is driven to rotate, causing the engine 104 to rotate. When a rotational speed of the engine 104 equals an idle speed of the engine 104, the engine 104 is successfully started. After the engine 104 is started, the clutch 105 transmits power from the engine 104 to the transmission 106 when the clutch 105 is engaged. The transmission 106 matches appropriate power from the engine 104 to wheels of the vehicle, so that the wheels rotate to drive the vehicle forward.

The BSG motor 102 commonly operates in the following three modes: a neutral (Neutral) mode, a torque control (Torque Control) mode, and a generator control (Generator Control) mode.

The neutral mode generally serves as a transition when the BSG motor 102 switches the operating mode. In addition, the BSG motor 102 is in a neutral mode when a fault occurs, to prevent another vehicle safety problem.

The torque control mode is the most commonly used operating mode for the BSG motor 102. In the torque control mode, an HCU in the vehicle may send a requested torque to the BSG motor 102, so that the BSG motor 102 outputs a torque to drive the engine 104 to start, generate electricity, or recover energy.

Depending on directions of output torques, the output torques of the BSG motor 102 may be divided into a positive torque and a negative torque. When the BSG motor 102 outputs the positive torque, it indicates that the BSG motor 102 is providing start-up assistance for the engine 104. When the BSG motor 102 outputs the negative torque, it indicates that a function of the BSG motor 102 is power generation or energy recovery.

The generator control mode is an operating mode of the BSG motor 102 when charging and discharging capability of the power battery is insufficient. In this operating mode, the BSG motor 102 cannot achieve start-up assistance, and is used only for power generation. In this case, the HCU no longer sends a requested torque to the BSG motor 102, but only provides a target voltage, to maintain a stable voltage inside the BSG motor 102.

Optionally, the BSG motor power system 100 further includes a starter 107, and the starter 107 is connected to the engine 104. The starter 107 may generally serve as an alternative solution for starting the engine 104.

It should be understood that the method for controlling a motor provided in the embodiment of the present invention is mainly applied to a torque control mode of the BSG motor.

The following describes a specific invention scenario of the BSG motor in the embodiment of the present invention. In the torque control mode, to ensure that the output torque of the BSG motor can approach the requested torque sent by the HCU, in an operating process of the BSG motor, a BSG motor controller ("motor controller" for short) continuously performs resolver self-learning (or referred to as resolver sensor self-learning), to perform torque compensation on the BSG motor.

The principle of resolver self-learning is to correct a deviation between a zero position of the BSG motor and a zero position of the resolver, to achieve an effect of torque compensation. A reason is that, generally, in a control process of the BSG motor, common position sensors mainly include a switch Hall sensor, an photoelectric encoder, a Tunnel Magneto Resistance (TMR) sensor, and a resolver (also referred to as a resolver sensor), with the resolver sensor being the most commonly used currently. The resolver sensor is an absolute position sensor, mainly used to obtain an absolute position of a rotor position of the BSG motor. However, the essence of BSG motor control lies in the interaction between a stator magnetic field and a rotor magnetic field. When the stator magnetic field and the rotor magnetic field are orthogonal to each other, a maximum output torque of the BSG motor is obtained. The stator magnetic field is obtained by using output current (or referred to as stator current). Therefore, in practical application, relying solely on an absolute rotor position obtained by the resolver sensor cannot enable the stator magnetic field to be accurately output, and a relative position between the rotor and the stator is also required. Based on the foregoing problem, the purpose of resolver self-learning is to measure a deviation between a zero position of the BSG motor and a zero position of a resolver during rotation of the BSG motor, to improve the accuracy of torque output of the BSG motor and enhance the control precision of the rotational speed and position of the BSG motor.

In a possible implementation, when the vehicle is in the intelligent start-stop mode, the HCU may control the BSG motor to always be in the torque control mode, and send a torque request to the motor controller, so that the motor controller controls the BSG motor to output a torque.

Intelligent start-stop is also known as "automatic start-stop". When a vehicle is waiting at a red light or in a congested traffic condition, after the driver normally depresses the brake to stop the vehicle, simultaneously shifts into neutral and releases the clutch, the intelligent engine start-stop system is activated. In this case, the engine stops operating and enters "fuel-saving mode". To restart the engine, the driver simply needs to depress the clutch, the intelligent engine start-stop system is deactivated, and then the driver shifts the gear and starts off.

When the vehicle is in the intelligent start-stop mode, if the engine is in a stopped state, a rotational speed of the engine is 0 rpm. Because the engine and the BSG motor are connected by a belt, the BSG motor also enters the torque control mode with a rotational speed close to 0 rpm. With the continuous execution of resolver self-learning, the resolver self-learning value fluctuates continuously, which may cause a self-learning result to exceed a pre-calibrated range. This causes the BSG motor to report a fault and stop operating, and switch the operating mode from the torque control mode to the neutral mode, so that the BSG motor cannot continue to output a torque in response to a torque request from the HCU. This eventually results in power interruption and vehicle stall while vehicle driving, and increasing a risk during the vehicle driving.

In view of the foregoing problems, the embodiment of the present invention provides a method for controlling a motor. According to this method, when a vehicle is in an intelligent start-stop mode and an engine is stopped, a BSG motor can be properly and accurately controlled, to ensure that the BSG motor can operate normally to drive the engine to start, thereby avoiding a problem that the vehicle cannot be started because the BSG motor cannot operate, and ensuring safety of the vehicle during driving.

FIG. 2 is a schematic flowchart of a method for controlling a motor according to an embodiment of the present invention. It should be understood that the method may be applied to any Electronic Control Unit (ECU) in a vehicle. In the embodiment of the present invention, the ECU that executes the method is taken as an example of a motor controller to describe the method for controlling a motor according to the embodiment of the present invention.

For example, as shown in FIG. 2, the method 200 includes the following steps:

201. Determining whether a rotational speed of a BSG motor is greater than or equal to a preset rotational speed, when an engine of a vehicle is in a stopped state and the vehicle is in an intelligent start-stop mode.

It should be understood that, based on the foregoing description, when the vehicle is in the intelligent start-stop mode, the BSG motor continuously remains in the torque control mode and performs torque compensation. When the engine is stopped, since the BSG motor continuously performs resolver self-learning, when a speed of the BSG motor is low, the vehicle may fail to start. Therefore, an invention scenario of the embodiment of the present invention may be summarized as follows: When the engine of the vehicle is in the stopped state and the vehicle is in the intelligent start-stop mode, the BSG motor is restricted from resolver self-learning by using the rotational speed of the BSG motor, that is, limiting the BSG motor from performing torque compensation calculation. This ensures that the BSG motor operates normally at a relatively low rotational speed, enables the vehicle to start normally, and ensures safety of the vehicle.

Therefore, in the embodiment of the present invention, during vehicle driving, if it is detected that the engine is in the stopped state, whether the vehicle is in the intelligent start-stop mode is first determined.

For example, a status of the engine may be obtained by the motor controller through an engine control module (Engine Control Module, ECM, also referred to as an engine controller) in the vehicle.

Optionally, the status of the engine includes a stopped state and a started state.

It should be understood that the intelligent start-stop mode is also controlled by the ECM. Specifically, the ECM may activate the intelligent start-stop mode in response to an activation operation for the intelligent start-stop mode. Alternatively, the ECM may deactivate the intelligent start-stop mode in response to a deactivation operation for the intelligent start-stop mode.

Optionally, triggering operations include a click operation, a voice command, and a gesture adjustment.

For example, when a physical button for the intelligent start-stop mode is configured in the vehicle, the ECM may activate or deactivate the intelligent start-stop mode in response to a driver's click operation on the physical button.

For another example, when a virtual button for the intelligent start-stop mode is displayed on a display device in the vehicle, the ECM may activate or deactivate the intelligent start-stop mode in response to a driver's click operation on the virtual button.

For another example, the driver may alternatively send a voice command, such as "activate the intelligent start-stop mode or deactivate the intelligent start-stop mode". The ECM responds to the voice command to activate or deactivate the intelligent start-stop mode.

For another example, if a gesture adjustment operation corresponding to the intelligent start-stop mode is pre-stored in the vehicle, the driver may perform the gesture adjustment operation. The ECM activates or deactivates the intelligent start-stop mode in response to the gesture adjustment operation.

Based on the foregoing control process of the intelligent start-stop mode, the motor controller may also obtain whether the vehicle is in the intelligent start-stop mode via the ECM. Specifically, the ECM may obtain whether the vehicle is in the intelligent start-stop mode via a control switch of the intelligent start-stop mode. Furthermore, the ECM may send a status of the intelligent start-stop mode to the motor controller.

It should be understood that when the driver deactivates the intelligent start-stop mode by using any one of the foregoing triggering operations, the vehicle is in a non-intelligent start-stop mode. In the non-intelligent start-stop mode, if an HCU identifies a driver's engine start operation (such as depressing an accelerator pedal, shifting to Drive (D) gear or Reverse (R) gear), the HCU may generate a start instruction of the engine and send the start instruction to the motor controller. The start instruction is, for example, "HCU_BSGInvStsReq:Torque_Control". After receiving the start instruction, the motor controller controls the BSG motor to switch the operating mode from the neutral mode to the torque control mode, and also outputs a torque. In this case, a rotational speed of the BSG motor continuously increases, which can drive an engine crankshaft to rotate. After a short time, the engine rotational speed tends to stabilize, and a vehicle start process ends. The torque control mode lasts for a relatively short time at low speeds. After the rotational speed stabilizes subsequently, the resolver self-learning value returns to normal as resolver self-learning continuously proceeds.

In the non-intelligent start-stop mode, if the engine is stopped, the HCU requests the BSG motor to return to the neutral mode, so that the BSG motor does not output a torque, and waits for the next start instruction.

It can be learned from the foregoing description that when the vehicle is in the non-intelligent start-stop mode, when the engine is stopped, the HCU will not request the BSG motor to enter the torque control mode, resolver self-learning will not occur, and therefore the problem of the BSG motor reporting a fault and the vehicle being unable to start will not arise.

Therefore, when the engine of the vehicle is in the stopped state and the vehicle is not in the non-intelligent start-stop mode, the motor controller controls the BSG motor not to perform torque output.

In a possible implementation, when the engine of the vehicle is in the stopped state and the vehicle is not in the intelligent start-stop mode, control of the BSG motor specifically includes:

when the engine is in the stopped state and the vehicle is not in the intelligent start-stop mode, controlling a operating mode of the BSG motor to be a neutral mode, to make the BSG motor not perform torque output, where the neutral mode is a transitional mode used when the BSG motor switches the operating mode or a operating mode used when the BSG motor is faulty.

With reference to the foregoing description, it may be learned that in the non-intelligent start-stop mode, if the engine is stopped, the HCU requests the BSG motor to return to the neutral mode, to wait for the next start instruction. Therefore, in a case that the engine is in the stopped state and the vehicle is not in the intelligent start-stop mode, the motor controller may control the BSG motor to switch the operating mode from the torque control mode to the neutral mode, without outputting the torque.

In the foregoing technical solution, when the engine of the vehicle is in the stopped state and the vehicle is not in the intelligent start-stop mode, the vehicle generally controls the BSG motor to be in the neutral mode in this state. The BSG motor does not output a torque in the neutral mode. Therefore, when the engine is in the stopped state and the vehicle is in the non-intelligent start-stop mode, the vehicle can control the BSG motor to operate normally, and the problem of failure to operate caused by torque compensation will not arise.

Conversely, when the driver activates the intelligent start-stop mode through any of the foregoing trigger operations, the motor controller obtains that the engine of the vehicle is stopped and the rotational speed of the BSG motor is relatively low, performing torque compensation via resolver self-learning may cause the BSG motor to malfunction. Therefore, in this case, the motor controller needs to control, with reference to the rotational speed of the BSG motor, the BSG motor to perform resolver self-learning, to avoid the malfunction of the BSG motor in a timely manner.

For example, the rotational speed of the BSG motor may be directly acquired by the motor controller via a rotational speed sensor.

It should be understood that, to accurately and reliably acquire the rotational speed of the BSG motor, before acquiring the rotational speed of the BSG motor, the motor controller needs to first detect whether the BSG motor can operate normally and whether the motor controller can communicate normally, that is, complete a self-check process of the BSG motor.

In a possible implementation, the detecting whether the BSG motor can operate normally and whether the motor controller can communicate normally includes:
obtaining a fault status of the BSG motor and a communication status of a motor controller, where the fault status is indicative of whether the BSG motor has a fault, and the communication status is indicative of whether the motor controller has a communication abnormality.

For example, the fault status of the BSG motor may be determined by the motor controller using a Diagnostic Trouble Code (DTC). For example, if the motor controller can obtain the DTC of the BSG motor, it indicates that the BSG motor has a fault. Conversely, if the motor controller fails to obtain the DTC of the BSG motor, it indicates that the BSG motor does not have a fault.

For example, for the communication status of the motor controller, the motor controller may independently determine whether it can receive data sent by another ECU and whether it can successfully send data to another ECU, that is, the motor controller determines whether it can interact with another ECU.

If the motor controller can successfully send data to the another ECU (for example, after sending data to the another ECU, the motor controller receives reception feedback from the another ECU) and can receive data sent by the other ECU, the motor controller determines that its own communication is normal. Conversely, if the motor controller fails to successfully send data to the another ECU, or fails to receive data sent by the another ECU, the motor controller determines that its own communication is abnormal.

Based on the foregoing determining process, the motor controller may determine whether its own communication is normal and whether the BSG motor has a fault.

In the foregoing technical solution, to accurately acquire the rotational speed of the BSG motor, before determining whether the rotational speed of the BSG motor is greater than or equal to the preset rotational speed, it first needs to determine whether the BSG motor has a fault, and whether the BSG motor controller can communicate with another ECU in the vehicle normally. Through detection of the BSG motor and the BSG motor controller, the rotational speed of the BSG motor can be accurately acquired.

In a possible implementation, after the self-check of the BSG motor is completed, the motor controller further acquiring the rotational speed of the BSG motor specifically includes:
when the fault status of the BSG motor is indicative of the BSG motor having no fault and the communication status of the motor controller is indicative of the motor controller being in normal communication, determining whether the rotational speed of the BSG motor is greater than or equal to the preset rotational speed.

When the self-check of the BSG motor is normal (that is, the BSG motor has no fault and the motor controller is in normal communication), the motor controller may acquire the rotational speed of the BSG motor and determine whether the rotational speed of the BSG motor is greater than or equal to the preset rotational speed.

It should be understood that the preset rotational speed may be construed as a minimum rotational speed preset by a person skilled in the art for performing torque compensation on the BSG motor and ensuring that the BSG motor reports no error.

Optionally, the preset rotational speed is 1000 rpm. In this embodiment of the present invention, the preset rotational speed may alternatively be adjusted according to an actual situation.

In the foregoing technical solution, when the BSG motor has no fault and the BSG motor controller is in normal communication, the vehicle acquires the rotational speed of the BSG motor, which can ensure accuracy of the acquired result, and ensure accuracy of subsequent torque output of the BSG motor.

202. Performing torque compensation on the BSG motor based on operating parameters of the BSG motor to obtain a target torque after the torque compensation, when the rotational speed is greater than or equal to the preset rotational speed, where the operating parameters of the BSG motor include a sine signal and a cosine signal generated during rotor rotation of the BSG motor, and a requested torque received by the BSG motor, and the torque compensation is used to make an output torque of the BSG motor close to the requested torque.

If the motor controller determines, according to Step 201, that the rotational speed of the BSG motor is greater than or equal to the preset rotational speed, it indicates that torque compensation performed in a case that the BSG motor rotates at the current rotational speed can ensure normal operation of the BSG motor. Therefore, in this case, the motor controller continues to perform torque compensation on the BSG motor, so that the output torque of the BSG motor is close to the requested torque of an HCU.

For example, assuming that the rotational speed of the BSG motor is 1200 rpm and is greater than the preset rotational speed 1000 rpm, the motor controller continues to perform torque compensation on the BSG motor.

Specifically, during torque compensation, the motor controller may obtain, based on the operating parameters of the BSG motor, the target torque after the torque compensation on the BSG motor.

Optionally, the operating parameters of the BSG motor include the sine signal and the cosine signal generated during rotor rotation of the BSG motor, and the requested torque of the BSG motor.

For example, the BSG motor includes a rotor and a stator. The stationary part in the BSG motor is referred to as the stator, on which pairs of DC-excited stationary main magnetic poles are mounted. The rotating part is referred to as the rotor, on which an armature winding is mounted. After being energized, the armature winding generates an induced electromotive force, which acts as a rotating magnetic field to produce electromagnetic torque for energy conversion.

In a operating process of the BSG motor, a resolver sensor may collect a sine signal and a cosine signal that correspond to a rotor position, and further a rotational position of the rotor is calculated. The rotational position of the rotor herein refers to an absolute rotational position of the rotor. Specifically, after the sine signal and the cosine signal are acquired, the sine signal and the cosine signal may be decoded to extract an envelope of the sine signal and an envelope of the cosine signal, and thus the absolute position of the rotor may be obtained.

For example, the requested torque of the BSG motor may be determined by the HCU based on a plurality of operating parameters of a vehicle during operation, and then sent to the motor controller. Specifically, in the embodiment of the present invention, a person skilled in the art may pre-calibrate the correspondence between a plurality of operation parameters and the requested torque. For example, the plurality of operation parameters may include parameters related to the requested torque, such as an accelerator pedal position, a vehicle speed, an engine rotational speed, and a BSG motor rotational speed. Further, when the BSG motor is required to output torque, the HCU may determine, with reference to the plurality of current operation parameters of the vehicle and the pre-calibrated correspondence, a requested torque currently sent to the motor controller.

After acquiring the requested torque, and the sine signal and the cosine signal that are generated during rotor rotation, the motor controller may perform torque compensation on the BSG motor.

In a possible implementation, the performing torque compensation on the BSG motor based on the operating parameters of the BSG motor to obtain the target torque after the torque compensation specifically includes:
determining a target zero-angle parameter of the BSG motor based on the sine signal and the cosine signal, where the target zero-angle parameter is used to correct a deviation between a zero position of the BSG motor and a zero position of the resolver; and
determining the target torque based on the target zero-angle parameter and the requested torque.

After acquiring the sine signal and the cosine signal that are generated during rotor rotation, the motor controller may obtain the target zero-angle parameter of the BSG motor based on the sine signal and the cosine signal, where the target zero-angle parameter is used to correct the deviation between the zero position of the BSG motor and the zero position if the resolver. By correcting the deviation between the zero position of the BSG motor and the zero position of the resolver, accuracy of the output torque of the BSG motor can be ensured.

In a possible implementation, the determining the target zero-angle parameter of the BSG motor based on the sine signal and the cosine signal specifically includes:
determining a zero-angle offset parameter based on the sine signal, the cosine signal, and a first mapping relationship, where the first mapping relationship is used to represent a correspondence between the sine signal, the cosine signal, and the zero-angle offset parameter;
determining a first square value corresponding to the sine signal and a second square value corresponding to the cosine signal;
determining a square root value of a sum of the first square value and the second square value; and
determining a sum of the square root value and the zero-angle offset parameter as the target zero-angle parameter.

The zero-angle offset parameter may be understood as a correction parameter related to the deviation between the zero position of the BSG motor and the resolver zero position.

For example, it is assumed that the sine signal and the cosine signal collected by the resolver sensor are respectively represented as sinA and cosB. In this embodiment of the present invention, zero-angle offset parameters corresponding to different combinations of sine signals and cosine signals may be pre-calibrated.

Table 1 is a schematic table illustrating the correspondence among a sine signal, a cosine signal, and a zero-angle offset parameter according to the embodiment of the present invention.

**Table 1**

| Sine signal | Cosine signal | Zero-angle offset parameter (offset) |
|---|---|---|
| sinA1 | cosB1 | offset1 |
| sinA1 | cosB2 | offset2 |
| sinA2 | cosB2 | offset3 |
| ... | ... | ... |

For example, as shown in Table 1, different combinations of sine signals and cosine signals correspond to different zero-angle offset parameter values. Therefore, based on the correspondence, after acquiring a sine signal and a cosine signal, the motor controller may obtain the corresponding zero-angle offset parameter based on the correspondence in the foregoing table. Assuming that the sine signal is sinA1 and the cosine signal is cosB2, the corresponding zero-angle offset parameter is offset2.

After the zero-angle offset parameter is obtained, the target zero-angle parameter may be obtained according to the following formula (1). $Y = sqrt \left({\left(sin A\right)}^{2}+{\left(cos B\right)}^{2}\right) + offset$

In formula (1),
*Y* denotes the target zero-angle parameter.

After obtaining the zero-angle offset parameter *offset*, the motor controller may first obtain a first square value corresponding to the sine signal and a second square value corresponding to the advance signal, then determine the sum of the first square value and the second square value, and next invoke a square root function sqrt () to calculate a square root value of the sum of the first square value and the second square value.

After the square root value of the first square value and the second square value is calculated, the sum of the square root value and the zero-angle offset parameter *offset* is determined as the target zero-angle parameter.

In the foregoing technical solution, when determining the target zero-angle parameter, the vehicle may obtain the zero-angle offset parameter by looking up the table according to the sine signal and the cosine signal, where the zero-angle offset parameter can directly reflect a deviation between a resolver zero position and a motor zero position, and further the vehicle calculates a first square value of the sine signal, a second square value of the cosine signal, and a square root value of a sum of the two square values. the sum of the obtained square root value and the zero-angle offset parameter is determined as the target zero-angle parameter.

It should be understood that the output torque of the BSG motor is directly related to and directly proportional to the stator current of the BSG motor, that is, a larger stator current results in a larger output torque; and a smaller stator current results in a smaller output torque. Therefore, correcting the deviation between the zero position of the BSG motor and the resolver zero position is essentially to ensure accuracy of the stator current of the BSG motor, thereby obtaining an accurate output torque and achieving the effect of torque compensation.

Therefore, after obtaining the target zero-angle parameter, the motor controller may further obtain the corrected accurate stator current, to obtain the target torque that has undergone torque compensation.

In a possible implementation, the determining the target torque based on the target zero-angle parameter and the requested torque includes:
determining a target stator current based on the target zero-angle parameter, the requested torque, and a second mapping relationship, where the second mapping relationship is used to represent a correspondence among the target zero-angle parameter, the requested torque, and the target stator current; and
determining the target torque based on the target stator current and a third mapping relationship, where the third mapping relationship is used to represent a correspondence between the target stator current and the target torque.

It should be understood that the stator current determines the final output torque of the BSG motor. During rotor rotation of the BSG motor, a magnitude and direction of the stator current in a stator coil change in real-time, causing an actual output torque to vary as well. In addition, since the BSG motor outputs torque in response to the torque request sent by the HCU, the output torque of the BSG motor is also affected by the requested torque. Thus, both the rotor position and the requested torque affect the stator current.

Based on the foregoing relationship, in the process of determining the target torque, the motor controller may first determine the target stator current that needs to be supplied to the stator coil in combination with the target zero-angle parameter of the BSG motor and the requested torque.

For example, in this embodiment of the present invention, a person skilled in the art may establish a plurality of correspondences based on a plurality of sets of zero-angle parameters, requested torques, and stator currents in advance. After the target zero-angle parameter and the requested torque of the current BSG motor are obtained, the current target stator current may be obtained based on the plurality of correspondences.

Table 2 is a schematic table illustrating the correspondence among a zero-angle parameter, a requested torque, and a stator current according to the embodiment of the present invention.

**Table 2**

| Zero-angle parameter | Requested torque (N·m) | Stator current (A) |
|---|---|---|
| Y1 | 500 | 100 |
| Y2 | 1000 | 150 |
| Y3 | 1500 | 200 |
| ... | ... | ... |

For example, as shown in Table 2, different zero-angle parameters and requested torques correspond to different stator current values. Therefore, after receiving the requested torque of the BSG motor and obtaining the target zero-angle parameter of the BSG motor according to the foregoing formula (1), the motor controller may obtain, by looking up the table, the target stator current corresponding to the current target zero-angle parameter and requested torque.

Assuming that the target zero-angle parameter is Y1 and the requested torque is 500 N·m, the motor controller may determine that the target stator current is 100 A.

To obtain a corrected target torque, in the embodiment of the present invention, a plurality of correspondences between the stator current of the BSG motor and the actual output torque of the BSG motor may be pre-established in the same manner as above. In the process of determining the target torque, similarly, the target torque is obtained based on the target stator current by looking up the table.

Table 3 is a schematic table illustrating a correspondence between a stator current and an actual output torque according to the embodiment of the present invention.

**Table 3**

| Stator current | Actual output torque |
|---|---|
| 100 | 499 |
| 150 | 1000 |
| 200 | 1501 |
| ... | ... |

For example, as shown in Table 3, with reference to the foregoing description, assuming that the target stator current is 100 A, the motor controller may obtain, by looking up the table, that a corresponding actual output torque is 499 N·m, namely, the target torque obtained after the torque compensation.

In the foregoing technical solution, when the rotational speed of the BSG motor is greater than or equal to the preset rotational speed, the vehicle performs torque compensation on the BSG motor. Specifically, the vehicle may determine the target zero-angle parameter of the BSG motor by using the sine signal and the cosine signal generated during rotor rotation of the BSG motor, and then correct, based on the target zero-angle parameter, the deviation between the zero position of the BSG motor and the zero position of the resolver.

After the target zero-angle parameter is obtained, to determine the target torque based on the target zero-angle parameter and the requested torque, since the target torque is directly proportional to the stator current of the BSG motor, the target stator current that actually needs to be supplied to a stator coil may first be obtained based on the target zero-angle parameter and the requested torque. Further, based on the target stator current, the target torque is obtained by looking up the table.

In another example, in addition to establishing a correspondence between a stator current and an actual output torque, a correspondence between the stator current and a compensation torque may also be established in the embodiment of the present invention. Thus, after the target stator current is obtained, a compensation torque corresponding to a current target stator current may be obtained by looking up the table. Then, a final target torque is obtained by summing the compensation torque and an original torque of the BSG motor obtained before the torque compensation.

The original torque of the BSG motor before the torque compensation may be calculated according to the following formula (2): $T = 9550 P / n$

In formula (2),
*T* denotes the original torque of the BSG motor obtained before the torque compensation, in a unit of Newton * meter (N·m);
*P* denotes an output power, in a unit of kilowatt-hour (Kw); and
*n* denotes a rotational speed of the BSG motor, in a unit of rpm.

According to the foregoing formula (2), the motor controller may calculate the original torque of the BSG motor obtained before the torque compensation.

After obtaining the target stator current, the motor controller may determine, by looking up the table, the compensation torque corresponding to the target stator current, and then sum the compensation torque and the original torque, to obtain a current target torque actually outputted by the BSG motor.

203. Controlling the BSG motor to output the target torque to assist the engine in starting, in response to a start instruction for the engine.

Based on the step 202, the motor controller may perform torque compensation on the output torque of the BSG motor when the rotational speed of the BSG motor is greater than the preset rotational speed, to obtain the target torque.

When the engine needs to be restarted, the BSG motor may output the target torque to ensure that the engine starts normally, enabling the vehicle to operate normally.

Optionally, a manner of restarting the engine includes an operation of depressing an accelerator pedal, or a gear shifting operation (for example, shifting to D gear or R gear).

After receiving the driver's restart operation for the engine, an HCU may generate a start instruction for the engine and send the start instruction to the motor controller. The motor controller, in response to the start instruction, controls the BSG motor to output the target torque to drive the engine to start.

In another possible implementation, when the rotational speed of the BSG motor is less than the preset rotational speed, the motor controller does not perform torque compensation on the BSG motor, which specifically includes:
when the rotational speed of the BSG motor is less than the preset rotational speed, stopping the torque compensation on the BSG motor.

For example, it is assumed that the rotational speed of the BSG motor is 800 rpm, which is less than the preset rotational speed of 1000 rpm. In this case, to avoid reporting an error by the BSG motor due to a fault, the motor controller stops resolver self-learning, that is, does not perform torque compensation, allowing the BSG motor to output according to the original torque.

In the foregoing technical solution, when the rotational speed of the BSG motor is less than the preset rotational speed, the vehicle stops torque compensation on the BSG motor, which can avoid a problem of an error reported by the BSG motor at a low rotational speed due to torque compensation, thereby ensuring that the BSG motor can operate normally at a low rotational speed, avoiding a risk that the vehicle stalls during driving, and ensuring driving safety.

In this embodiment of the present invention, it is verified by an experiment that, performing torque compensation on the BSG motor when the rotational speed of the BSG motor is greater than the preset rotational speed can ensure stability of self-learning.

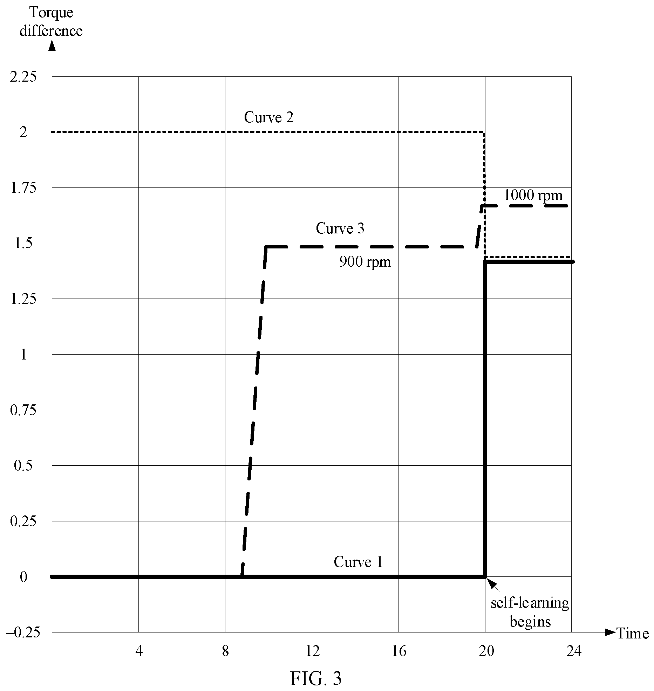

FIG. 3 is a graph showing variation curves of resolver self-learning controlled based on engine rotational speed according to an embodiment of the present invention.

For example, as shown in FIG. 3, the horizontal axis represents time, and the vertical axis represents a torque difference between an output torque of a BSG motor and a requested torque. Curve 1 represents a variation curve of a minimum torque difference between an output torque of the BGS motor obtained before torque compensation and a requested torque, denoted as VoltMinEncDiagSqSum. Curve 2 represents a variation curve of a maximum torque difference between the output torque of the BSG motor obtained before torque compensation and the requested torque, denoted as VoltMaxEncDiagSqSum, with the corresponding values of 0 and 2, respectively. Curve 3 represents a rotational speed variation curve of the BSG motor. It can be learned from FIG. 3 that, when the rotational speed of the BSG motor is greater than 1000 rpm, resolver self-learning begins, and since then, both the curve 1 and the curve 2 shift to about 1.4 and remain stable, indicating that a process of self-learning keeps a dynamic balance.

Based on the method in embodiments of the present invention, in the intelligent start-stop mode, when the engine is stopped, the BSG motor can operate normally in a full-speed condition.

In conclusion, to ensure that the vehicle can be started again when the engine is in a stopped state during driving, the present invention provides a method for controlling a motor. In the method, when the engine is in the stopped state, it is first determined whether the vehicle is in the intelligent start-stop mode. If yes, it is determined whether the rotational speed of the BSG motor is greater than or equal to the preset rotational speed. When the rotational speed of the BSG motor is greater than or equal to the preset rotational speed, torque compensation is performed on the BSG motor by using the operating parameters of the BSG motor, so that the output torque of the BSG motor is close to the requested torque. When the vehicle is in the intelligent start-stop mode and the engine is stopped, because the BSG motor continuously performs torque compensation, when the BSG motor rotates at a relatively low speed, the BSG motor may report an error and fail to drive the engine to rotate, resulting in a vehicle restart failure. Therefore, when the rotational speed of the BSG motor is greater than the preset rotational speed, performing torque compensation on the BSG motor can improve accuracy of torque output of the BSG motor. In addition, a problem of error reporting of the BSG motor caused by performing torque compensation at a low speed can be avoided, so that the BSG motor can operate normally when the engine is stopped and at low speed, thereby reducing a risk that the vehicle failing to restart during driving, and ensuring safety of the vehicle and occupants in the vehicle.

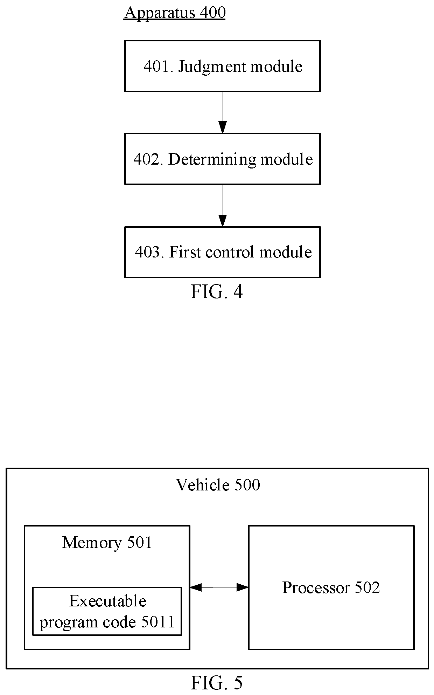

FIG. 4 is a schematic structural diagram of an apparatus for controlling a motor according to an embodiment of the present invention.

For example, as shown in FIG. 4, the apparatus 400 includes:
a judgment module 401, configured to: determine whether a rotational speed of a BSG motor is greater than or equal to a preset rotational speed, when an engine of a vehicle is in a stopped state and the vehicle is in an intelligent start-stop mode;
a determining module 402, configured to: perform torque compensation on the BSG motor based on operating parameters of the BSG motor to obtain a target torque after the torque compensation, when the rotational speed is greater than or equal to the preset rotational speed, where the operating parameters of the BSG motor include a sine signal and a cosine signal generated during rotor rotation of the BSG motor, and a requested torque received by the BSG motor, and the torque compensation is used to make an output torque of the BSG motor close to the requested torque; and
a first control module 403, configured to: control the BSG motor to output the target torque to assist the engine in starting, in response to a start instruction for the engine.

In a possible implementation, the apparatus further includes a second control module, configured to: stop the torque compensation on the BSG motor, when the rotational speed of the BSG motor is less than the preset rotational speed.

In a possible implementation, the determining module 402 is specifically configured to: determine a target zero-angle parameter of the BSG motor based on the sine signal and the cosine signal, where the target zero-angle parameter is used to correct a deviation between a zero position of the BSG motor and a zero position of a resolver; and determine the target torque based on the target zero-angle parameter and the requested torque.

In a possible implementation, the determining module 402 is further configured to: determine a zero-angle offset parameter based on the sine signal, the cosine signal, and a first mapping relationship, where the first mapping relationship is used to represent a correspondence between the sine signal, the cosine signal, and the zero-angle offset parameter; determine a first square value corresponding to the sine signal and a second square value corresponding to the cosine signal; determine a square root value of a sum of the first square value and the second square value; and determine a sum of the square root value and the zero-angle offset parameter as the target zero-angle parameter.

In a possible implementation, the determining module 402 is further configured to: determine a target stator current based on the target zero-angle parameter, the requested torque, and a second mapping relationship, where the second mapping relationship is used to represent a correspondence among the target zero-angle parameter, the requested torque, and the target stator current; and determine the target torque based on the target stator current and a third mapping relationship, where the third mapping relationship is used to represent a correspondence between the target stator current and the target torque.

In a possible implementation, the apparatus further includes: a third control module, configured to: control an operating mode of the BSG motor to be a neutral mode, to make the BSG motor not perform torque output, when the engine is in the stopped state and the vehicle is not in the intelligent start-stop mode, where the neutral mode is a transitional mode used when the BSG motor switches the operating mode or a operating mode used when the BSG motor is faulty.

In a possible implementation, before the determining whether the rotational speed of the BSG motor is greater than or equal to the preset rotational speed, the apparatus further includes: an acquisition module, configured to obtain a fault status of the BSG motor and a communication status of a BSG motor controller, where the fault status is indicative of whether the BSG motor has a fault, and the communication status is indicative of whether the BSG motor has a communication abnormality.

In a possible implementation, the judgment module 401 is specifically configured to: determine whether the rotational speed of the BSG motor is greater than or equal to the preset rotational speed, when the fault status of the BSG motor is indicative of the BSG motor having no fault and the communication status of the BSG motor controller is indicative of the BSG motor controller being in normal communication.

FIG. 5 is a schematic structural diagram of a vehicle according to an embodiment of the present invention.

For example, as shown in FIG. 5, the vehicle 500 includes a memory 501 and a processor 502, where the memory 501 stores executable program code 5011, and the processor 502 is configured to invoke and execute the executable program code 5011 to execute the method for controlling a motor.

In addition, an embodiment of the present invention further protects an apparatus. The apparatus may include a memory and a processor. The memory stores executable program code. The processor is configured to invoke and execute the executable program code to execute the method for controlling a motor provided in the embodiment of the present invention.

In embodiments, the apparatus may be divided into functional modules according to the foregoing method examples. For example, each function may correspond to a corresponding functional module, or two or more functions may be integrated into one processing module. The foregoing integrated module may be implemented in a form of hardware. It should be noted that module division in embodiments of the present invention is an example, and is merely logical function division. In actual implementation, there may be another division manner.

In a case that each function corresponds to a corresponding functional module, the apparatus may further include a judgment module, a determining module, a first control module, and the like. It should be noted that all related content of each step involved in the foregoing method embodiments may be referred to function descriptions of corresponding functional modules, and details are not described herein again.

It should be understood that the apparatus provided in this embodiment is configured to execute the foregoing method for controlling a motor, and therefore, a same effect as that in the foregoing implementation method may be achieved.

In a case that an integrated unit is used, the apparatus may include a processing module and a storage module. When the apparatus is applied to a vehicle, the processing module may be configured to control and manage actions of the vehicle. The storage module may be configured to support the vehicle in executing mutual program code or the like.

The processing module may be a processor or a controller, and may implement or execute various exemplary logical blocks, modules, and circuits described with reference to the content disclosed in the present invention. The processor may alternatively be a combination that implements a computing function, for example, includes one or more microprocessor combinations, a combination of a digital signal processing (digital signal processing, DSP) and a microprocessor, and the storage module may be a memory.

In addition, the apparatus provided in the embodiment of the present invention may be specifically a chip, a component, or a module, and the chip may include a connected processor and a memory. The memory is configured to store instructions, and when the processor invokes and executes the instructions, the chip may execute the method for controlling a motor provided in the foregoing embodiments.

An embodiment further provides a computer-readable storage medium. The computer-readable storage medium stores computer program code. When the computer program code is executed on a computer, the computer executes the foregoing related method steps to implement the method for controlling a motor provided in the foregoing embodiments.

An embodiment further provides a computer program product. When the computer program product is executed on a computer, the computer executes the foregoing related steps to implement the method for controlling a motor provided in the foregoing embodiments.

The apparatus, the computer-readable storage medium, the computer program product, or the chip provided in the embodiments are all used to execute the corresponding methods described above. Therefore, for their beneficial effects that can be achieved, reference may be made to the beneficial effects in the corresponding methods described above. Details are not described herein again.

Through the description of the foregoing implementations, those skilled in the art may understand that for the purpose of convenient and brief description, the division of the foregoing function modules are only used as an example for illustration. In actual invention, the foregoing functions may be allocated to different function modules for implementation as required, that is, an inner structure of an apparatus is divided into different function modules to implement all or a part of the functions described above.

In the embodiments provided in the present invention, it should be understood that the disclosed apparatus and method may be implemented in other manners. For example, the described apparatus embodiments are merely examples. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The foregoing contents are merely specific implementations of the present invention, but the protection scope of the present invention is not limited thereto. Any variation or replacement readily figured out by a person skilled in the art within the technical scope disclosed in the present invention shall fall within the protection scope of the present invention. Therefore, the protection scope of the present invention should be subject to the protection scope of the claims.

## Claims

1. A method for controlling a motor, comprising:
determining whether a rotational speed of a BSG motor is greater than or equal to a preset rotational speed, when an engine of a vehicle is in a stopped state and the vehicle is in an intelligent start-stop mode;
performing torque compensation on the BSG motor based on operating parameters of the BSG motor to obtain a target torque after the torque compensation, when the rotational speed is greater than or equal to the preset rotational speed, wherein the operating parameters of the BSG motor comprise a sine signal and a cosine signal generated during rotor rotation of the BSG motor, and a requested torque of the BSG motor, and the torque compensation is used to make an output torque of the BSG motor close to the requested torque; and
controlling the BSG motor to output the target torque to assist the engine in starting, in response to a start instruction for the engine.

2. The method according to claim 1, wherein the method further comprises:
stopping the torque compensation on the BSG motor, when the rotational speed of the BSG motor is less than the preset rotational speed.

3. The method according to claim 1, wherein the performing torque compensation on the BSG motor based on the operating parameters of the BSG motor to obtain the target torque after the torque compensation comprises:
determining a target zero-angle parameter of the BSG motor based on the sine signal and the cosine signal, wherein the target zero-angle parameter is used to correct a deviation between a zero position of the BSG motor and a zero position of a resolver; and
determining the target torque based on the target zero-angle parameter and the requested torque.

4. The method according to claim 3, wherein the determining the target zero-angle parameter of the BSG motor based on the sine signal and the cosine signal comprises:
determining a zero-angle offset parameter based on the sine signal, the cosine signal, and a first mapping relationship, wherein the first mapping relationship is used to represent a correspondence between the sine signal, the cosine signal, and the zero-angle offset parameter;
determining a first square value corresponding to the sine signal and a second square value corresponding to the cosine signal;
determining a square root value of a sum of the first square value and the second square value; and
determining a sum of the square root value and the zero-angle offset parameter as the target zero-angle parameter.

5. The method according to claim 3, wherein the determining the target torque based on the target zero-angle parameter and the requested torque comprises:
determining a target stator current based on the target zero-angle parameter, the requested torque, and a second mapping relationship, wherein the second mapping relationship is used to represent a correspondence among the target zero-angle parameter, the requested torque, and the target stator current; and
determining the target torque based on the target stator current and a third mapping relationship, wherein the third mapping relationship is used to represent a correspondence between the target stator current and the target torque.

6. The method according to claim 1, wherein the method further comprises:
controlling an operating mode of the BSG motor to be a neutral mode, to make the BSG motor not perform torque output, when the engine is in the stopped state and the vehicle is not in the intelligent start-stop mode, wherein the neutral mode is a transitional mode used when the BSG motor switches the operating mode or a operating mode used when the BSG motor is faulty.

7. The method according to claim 1, wherein before the determining whether the rotational speed of the BSG motor is greater than or equal to the preset rotational speed, the method further comprises:
obtaining a fault status of the BSG motor and a communication status of a BSG motor controller, wherein the fault status is indicative of whether the BSG motor has a fault, and the communication status is indicative of whether the BSG motor controller has a communication abnormality.

8. The method according to claim 7, wherein the determining whether the rotational speed of the BSG motor is greater than or equal to the preset rotational speed comprises:
determining whether the rotational speed of the BSG motor is greater than or equal to the preset rotational speed, when the fault status of the BSG motor is indicative of that the BSG motor having no fault and the communication status of the BSG motor controller is indicative of the BSG motor controller being in normal communication.

9. An apparatus for controlling a motor, comprising:
a judgment module, configured to: determine whether a rotational speed of a BSG motor is greater than or equal to a preset rotational speed, when an engine of a vehicle is in a stopped state and the vehicle is in an intelligent start-stop mode;
a determining module, configured to: perform torque compensation on the BSG motor based on operating parameters of the BSG motor to obtain a target torque after the torque compensation, when the rotational speed is greater than or equal to the preset rotational speed, wherein the operating parameters of the BSG motor comprise a sine signal and a cosine signal generated during rotor rotation of the BSG motor, and a requested torque received by the BSG motor, and the torque compensation is used to make an output torque of the BSG motor close to the requested torque; and
a first control module, configured to: control the BSG motor to output the target torque to assist the engine in starting, in response to a start instruction for the engine.

10. A vehicle, comprising:
a memory, configured to store executable program code; and
a processor, configured to invoke and execute the executable program code from the memory and run executable program code, to cause the vehicle to execute the method according to any one of claims 1 to 8.
